# FASCICULE DE BREVET EUROPEEN

(11) **EP 2 765 537 B1**
(45) Date de publication et mention de la délivrance du brevet: **08.11.2017**
(21) Numéro de dépôt: 14000409.4
(22) Date de dépôt: 04.02.2014
(51) Int. Cl.: G06K 19/077

(54) **Dispositif d'identification par radiofréquences d'objets allongés montés à bord d'un aéronef, tel que des câbles ou des conduits**
Vorrichtung zum Identifizieren über Funkfrequenzen von länglichen Gegenständen, die an Bord eines Luftfahrzeugs montiert sind, wie etwa Kabel oder Leitungen
Radio frequency identification device for elongate objects mounted on board an aircraft, such as cables or ducts

(30) Priorité: 06.02.2013 FR 1300243
(43) Date de publication de la demande: 13.08.2014
(73) Titulaire: Airbus Helicopters, 13725 Marignane Cedex (FR)
(72) Inventeur: Pittau, Serge, 13720 La Bouilladisse (FR)
(74) Mandataire: GPI & Associés

(56) Documents cités:
- GB-A- 2 467 185
- US-A1- 2006 186 210

## Description

La présente invention est du domaine des procédés et des dispositifs d'échange d'informations à distance par radiofréquences entre un récepteur passif et un émetteur actif, mettant en oeuvre un marqueur à radiofréquences communément désigné par marqueur RFID (d'après l'acronyme anglais Radio-Frequency Identification) pour identifier un objet par échange de radiofréquences entre un tel marqueur à radiofréquences passif implanté sur l'objet à identifier et un lecteur actif distant de l'objet à identifier.

La présente invention s'inscrit dans le cadre des dispositifs et des procédés d'identification individuelle d'au moins un objet allongé participant d'un réseau équipant un aéronef, giravion notamment. Un tel réseau est par exemple un réseau de conduction d'un flux entre deux organes du giravion, tels qu'un flux d'énergie électrique ou un fluide indifféremment à l'état liquide ou gazeux. Un tel objet allongé participant d'un réseau est notamment agencé en conduit aéraulique ou hydraulique, en câble ou un faisceau de câbles voire en gaine technique ou en profilé par exemple.

D'une manière générale, il est communément compris par objet allongé un objet s'étendant longitudinalement suivant une longueur significativement supérieure à la plus grande dimension de son extension transversale, ci-après désignée par largeur.

Concernant le domaine de l'identification d'objets, il est connu des dispositifs d'identification mettant en oeuvre une technique d'échanges d'informations entre un lecteur actif et un marqueur à radiofréquences passif du type RFID. Le marqueur à radiofréquences intègre des données aptes à être identifiées à distance par le lecteur pour un signal donné, notamment en vue de l'identification d'un objet porteur du marqueur à radiofréquences.

Le marqueur à radiofréquences comporte dans sa généralité au moins une puce électronique connectée à une antenne, telle qu'une antenne monobrin ou à multiple brins. Le marqueur à radiofréquences, composé de la puce électronique et de l'antenne, est couramment intégré à un substrat flexible en étant par exemple rapporté ou encapsulé dans une étiquette exploitée pour implanter par scellement le marqueur à radiofréquences sur l'objet à identifier.

Plus particulièrement selon une technique courante, le substrat flexible est de conformation plane tel qu'agencé en feuille ou en plaque souple. Le marqueur à radiofréquences est implanté sur l'objet à identifier par collage ou technique analogue de scellement du substrat flexible sur l'objet à identifier.

Pour permettre un échange omnidirectionnel des radiofréquences entre le marqueur à radiofréquences et le lecteur, il est traditionnel de conformer l'antenne dans le plan du substrat flexible par enroulement du ou des brins en boucle sur eux-mêmes, tel qu'en spirale.

Il est connu d'optimiser les performances du marqueur à radiofréquences en multipliant le nombre de brins de l'antenne. Il est notamment connu des marqueurs à radiofréquences à antenne dipolaire, selon lesquels deux brins d'antenne sont connectés à la même puce électronique. Pour optimiser l'échange de radiofréquences entre le lecteur et le marqueur à radiofréquences, un même marqueur à radiofréquences comporte potentiellement une ou plusieurs antennes dipolaires.

L'extension et la conformation des brins de la ou des antennes dipolaires sont adaptées pour permettre l'échange nécessaire de radiofréquences entre le lecteur et le marqueur à radiofréquences procurant le fonctionnement du dispositif d'identification.

On pourra par exemple se reporter aux documents EP2328108 (SYMBOL TECHNOLOGIES INC) et US2006208900 (ETHER INC X), qui décrivent de tels marqueurs à radiofréquences comprenant une antenne dipolaire.

L'utilisation des marqueurs à radiofréquences est courante dans tous les domaines pour identifier un objet porteur d'un tel marqueur à radiofréquences. Dans le domaine de l'aéronautique plus particulièrement, les marqueurs à radiofréquences sont notamment exploités pour identifier individuellement des objets allongés participant d'un réseau, tels que des câblages ou des conduits équipant un aéronef.

On pourra à ce propos se reporter au document FR2962589 (LABINAL), qui décrit une méthode de construction d'une base de données exploitant des marqueurs à radiofréquences répartis sur des câbles ou des faisceaux de câbles composant un réseau de câblage équipant un avion.

Un problème général posé réside dans la qualité et la fiabilité de l'échange des radiofréquences entre un marqueur à radiofréquences et un lecteur distant de l'objet à identifier. La qualité et la fiabilité d'un tel échange dépendent son seulement de la longueur du ou des brins de l'antenne, mais aussi de l'environnement de l'objet à identifier porteur du marqueur à radiofréquences.

Idéalement, il est nécessaire de placer le lecteur face au marqueur à radiofréquences en évitant la présence entre eux d'un obstacle au passage des radiofréquences, obstacle métallique notamment. La position relative entre le lecteur et le marqueur à radiofréquences est essentielle pour optimiser l'activation du marqueur à radiofréquences par le lecteur et pour favoriser l'échange de données entre eux.

Dans le contexte d'une identification d'un câblage ou d'un conduit équipant un aéronef, de telles contraintes sont délicates à respecter. En effet, les marqueurs à radiofréquences sont implantés sur les câbles et les conduits préalablement à leur installation à bord de l'aéronef. Or, la conformation allongée d'un objet à identifier tel qu'un câble, un faisceau de câbles, un conduit ou un profilé par exemple, ne permet pas de préjuger de l'orientation sur elle-même de la section de l'objet à identifier avant son installation à bord de l'aéronef, et donc ne permet pas de préjuger de la position relative entre le lecteur et le marqueur à radiofréquences en situation de fonctionnement du dispositif d'identification.

Une implantation sur site des marqueurs à radiofréquences sur un objet à identifier préalablement installé à bord de l'aéronef est fastidieuse et n'est pas une solution industriellement adaptée.

De surcroît, un même lecteur peut être exploité pour coopérer avec plusieurs marqueurs à radiofréquences implantés sur des objets à identifier qui leur sont respectivement affectés. Or, la position à bord de l'aéronef et/ou l'orientation des différents objets à identifier par un même lecteur sont potentiellement différentes.

Il en ressort que traditionnellement, les marqueurs à radiofréquences utilisés dans le domaine de l'aéronautique pour identifier les câbles et les conduits sont structurellement conçus pour permettre au mieux un échange des radiofréquences entre le lecteur et le ou les marqueurs à radiofréquences.

Cependant, la performance et la fiabilité de l'échange des radiofréquences entre le lecteur et un ou plusieurs marqueurs à radiofréquences, sont néanmoins encore affectées selon la position et/ou selon l'orientation des marqueurs à radiofréquences sur les objets à identifier par rapport à la position du lecteur.

De tels problèmes d'implantation, de positionnement et d'orientation d'un marqueur à radiofréquences sur un objet allongé à identifier, tel qu'un câble électrique, ont été soulevés dans le document GB 2 467 185 (NAVIGATOR SYSTEMS Ltd).

En effet pour résoudre ces problèmes, le document GB 2 467 185 propose d'implanter un marqueur à radiofréquences sur un câble électrique par enroulement en hélice des brins de l'antenne du marqueur à radiofréquences autour du câble. Ces dispositions permettent d'obtenir un échange de radiofréquences entre le lecteur et le marqueur à radiofréquences sans préjuger, lors de l'implantation du marqueur à radiofréquences sur le câble, de l'emplacement, de la position et/ou de l'orientation du câble installé sur site d'exploitation.

Toujours selon le document GB 2 467 185, il est aussi proposé d'implanter sur un support le marqueur à radiofréquences classiquement imprimé sur un substrat flexible. Un tel support forme avantageusement une entretoise transversale entre le câble et le marqueur à radiofréquences, pour éviter de perturber l'échange des radiofréquences entre le lecteur et le marqueur à radiofréquences compte tenu du caractère métallique du câble.

Toujours selon le document GB 2 467 185, il est encore proposé d'agencer le support en manchon longitudinalement fendu, pour faciliter l'installation par un opérateur du marqueur à radiofréquences localement autour du câble à partir d'une approche du support suivant une orientation transversale au câble.

De telles dispositions proposées par le document GB 2 467 185 méritent néanmoins d'être améliorées dans le cadre d'une identification individuelle d'un objet allongé participant d'un réseau monté à bord d'un aéronef, notamment au regard des modalités d'implantation localisée du marqueur à radiofréquences sur un quelconque objet allongé à identifier.

En effet l'identification par un opérateur à bord de l'aéronef de l'objet allongé doit pouvoir être facilement opérée, dans le contexte d'un environnement potentiellement encombré et difficile d'accès de l'objet allongé à identifier et compte tenu de la diversification et du nombre conséquent d'objets allongés montés à bord de l'aéronef devant pouvoir être au besoin individuellement identifiés.

Il est aussi recherché de permettre une identification individuelle des objets allongés montés à bord de l'aéronef obtenue avec des coûts les plus faibles possibles. Une telle recherche de moindres coûts concerne notamment une simplification de la structure même du marqueur à radiofréquences et de ses modalités propres d'obtention, ainsi qu'une simplification des moyens de fixation dont le marqueur à radiofréquences doit être muni pour son implantation sur l'objet allongé à identifier.

Outre une structure recherchée simple de tels moyens de fixation, leur mise en oeuvre doit pouvoir être opérée rapidement par un opérateur implantant le marqueur à radiofréquences sur l'objet allongé à identifier.

Cependant, la simplicité de structure des moyens de fixation ne doit pas porter atteinte à la qualité et à la fiabilité de la fixation obtenue du marqueur à radiofréquences sur l'objet allongé, notamment dans le contexte d'une implantation du marqueur à radiofréquences à bord d'un aéronef pouvant être soumis à des vibrations importantes, tel que dans le cas d'un giravion.

Il est aussi à prendre en compte que l'aéronef est potentiellement équipé d'une pluralité de réseaux de structures différentes, tels que des réseaux électriques, des conduits fluidiques et/ou des gaines techniques par exemple. Une telle diversité de structure des réseaux implique que les divers objets allongés montés à bord de l'aéronef peuvent être issus de matériaux divers et être de sections diverses, tant en conformation qu'en dimensions.

Dans ces conditions, il est opportun que lesdits moyens de fixation procurent une immobilisation fiable du marqueur à radiofréquences en un emplacement déterminé sur l'objet allongé, et cela quelles que soient la conformation et/ou les dimensions potentielles de sa section transversale.

Bien évidemment une telle recherche s'inscrit aussi sous la contrainte d'une exploitation fiable du marqueur à radiofréquences, en favorisant la qualité des échanges de radiofréquences entre le lecteur et le marqueur à radiofréquences compte tenu du caractère potentiellement métallique de l'objet allongé à identifier.

Dans ce contexte, le but de la présente invention est de proposer un dispositif d'identification individuelle d'objets de conformation allongée montés à bord d'un aéronef, giravion notamment, par échange de radiofréquences entre un marqueur à radiofréquences à antenne dipolaire et un lecteur distant du marqueur à radiofréquences.

Il est plus particulièrement visé par la présente invention de proposer un tel dispositif dans le cadre de l'ensemble des contraintes et des problèmes à résoudre qui ont été énoncés.

Dans le contexte de la présente invention et des difficultés à surmonter, l'objet à identifier est notamment constitutif d'un réseau équipant un aéronef, giravion notamment. Un tel réseau est compris comme comprenant au moins un objet allongé à identifier individuellement reliant entre eux deux organes distants de l'aéronef. De tels objets allongés sont par exemple formés de câbles ou de faisceaux de câbles dédiés à la conduction d'énergie électrique de puissance ou des câbles de conduction de signaux électriques, ou encore des profilés ou des conduits tels que des conduits aérauliques ou des conduits hydrauliques, voire encore des conduits ou des profilés agencés en gaine technique de passage d'au moins un organe de l'aéronef.

Tel que connu, le dispositif de la présente invention comprend au moins un dit marqueur à radiofréquences coopérant avec un dit lecteur par échange entre eux de radiofréquences. Ledit au moins un marqueur à radiofréquences est intégré à un substrat flexible et comporte au moins une antenne dipolaire à brins connectés à au moins une puce électronique. Le marqueur à radiofréquences est muni de moyens de fixation sur l'objet à identifier, lesdits moyens de fixation étant aptes à maintenir en conformation autour de l'objet à identifier chacun des brins de l'antenne dipolaire selon un enroulement en hélice à au moins un tour.

Les moyens de fixation sont aptes à immobiliser le marqueur à radiofréquences sur l'objet à identifier suivant un enroulement en hélice de chacun des brins de l'antenne s'étendant suivant l'ensemble des dimensions de l'objet à identifier définissant géométriquement sa section transversale et sa longueur.

Bien évidemment, il est compris que la longueur des hélices respectivement formées par chacun des brins de l'antenne est considérée suivant l'extension axiale de l'hélice et que sa largueur est considérée suivant une quelconque dimension d'extension transversale de l'hélice orientée orthogonalement à sa longueur.

Il ressort de ces dispositions que quelles que soient la position et/ou l'orientation relatives entre l'objet à identifier et le lecteur, au moins un tronçon de chacun des brins de l'antenne dipolaire est disposé à une position idéale d'échange de radiofréquences entre le lecteur et le marqueur à radiofréquences.

Le dispositif de la présente invention est principalement reconnaissable en ce que lesdits moyens de fixation sont formés par le substrat flexible qui est à mémoire de forme, lesdits moyens de fixation étant du type à enserrement de l'objet à identifier par rétraction du substrat flexible consécutivement à son étirement autour de l'objet à identifier.

Ces dispositions sont telles que l'ensemble formé par le marqueur à radiofréquences intégré au substrat flexible peut en lui-même être utilisé pour l'identification individuelle de divers objets à identifier, quelles que soient leurs structures respectives (câble ou conduit par exemple), leurs dimensions transversales respectives dans une plage raisonnable de variation de dimensions transversales et/ou les conformations de leurs sections transversales respectives (circulaire ou polygonale par exemple).

En outre, la fixation du marqueur à radiofréquences sur un objet à identifier est effectuée rapidement et aisément par un opérateur, par déformation du substrat flexible et par positionnement du substrat flexible localement autour de l'objet à identifier, puis par enserrement de l'objet à identifier par le substrat flexible sous l'effet de sa rétraction suite à une interruption de sa mise à l'état déformé par l'opérateur, conformément à un enroulement en hélice des brins des antennes autour et en périphérie de l'objet à identifier.

De plus, l'ensemble formé par le marqueur à radiofréquences intégré au substrat flexible peut être installé autour de l'objet à identifier sans préjuger d'une opération ultérieure de finition de l'objet à identifier à effectuer, telle qu'une opération de mise en place d'un revêtement de protection autour de l'objet à identifier, ledit revêtement étant alors placé en couverture dudit ensemble.

Par exemple, ledit ensemble peut être placé sous une protection tissée de revêtement extérieur d'un objet à identifier formé d'un câble ou d'un faisceau de câbles. Par exemple encore, ledit ensemble peut être placé sous une couche de polymère protégeant un objet à identifier formé par exemple d'un conduit, d'un profilé ou d'une gaine technique.

Le processus d'industrialisation du marquage de l'objet à identifier par au moins un marqueur à radiofréquences est simplifié et est obtenu à moindres coûts.

Selon une forme de réalisation, le substrat flexible est élastiquement déformable en étant agencé en ruban torsadé. Le marqueur à radiofréquences est intégré au substrat flexible selon une orientation des brins s'étendant suivant l'orientation des torses du ruban torsadé.

Ledit ruban torsadé est apte à procurer non seulement une protection pour au moins un marqueur à radiofréquences intégré au ruban torsadé, mais aussi une protection pour l'objet à identifier. En outre la longueur du ruban torsadé peut être définie conséquente, le ruban torsadé pouvant être muni d'une pluralité de marqueurs à radiofréquences répartis sur sa longueur et pouvant s'étendre le long d'une majeure partie de l'objet à identifier.

Selon une autre forme de réalisation, le substrat flexible est agencé en plaque souple élastiquement déformable, telle que formée d'un film étirable, issue d'un matériau thermoplastique et formant avantageusement une étiquette à mémoire de forme intégrant le marqueur à radiofréquences.

Par exemple et selon une forme de réalisation aisée à mettre en oeuvre à moindres coûts, ledit matériau thermoplastique dont est issu le substrat flexible est le polytétrafluoroéthylène (PTFE).

Le substrat flexible est encore potentiellement issu d'un matériau plastique à mémoire de forme (SMP d'après l'acronyme anglais Shape Memory Plastics), tel qu'un polyuréthane thermoplastique par exemple. Un tel matériau plastique à mémoire de forme procure un enserrement de l'objet à identifier à température ambiante consécutivement à une déformation du substrat flexible provoquée par sa mise à température de commutation indifféremment supérieure ou inférieure à un seuil de température défini pour une température ambiante prédéterminée du substrat flexible.

Tel que précédemment visé, un giravion est soumis à d'importantes vibrations. Dans ce contexte, il peut être opportun de compléter les moyens de fixation du marqueur à radiofréquences par des moyens d'attache. De tels moyens d'attache sont accessoirement exploités, notamment dans le cas où l'objet à identifier est monté à bord du giravion dans un environnement soumis à de fortes vibrations.

De tels moyens d'attache permettent au besoin de conforter l'immobilisation du substrat flexible sur l'objet à identifier, en étant par exemple formés d'au moins un collier de serrage du substrat flexible autour de l'objet à identifier.

Le marqueur à radiofréquences est potentiellement rapporté en surface du substrat flexible, par scellement notamment tel que par collage. Le scellement du marqueur à radiofréquences est de préférence ménagé au moyen d'une colle souple pour éviter une dégradation du marqueur à radiofréquences sous l'effet de la déformation du substrat flexible lors de son implantation sur l'objet à identifier.

Le marqueur à radiofréquences est potentiellement encapsulé à l'intérieur du substrat flexible entre deux couches du substrat flexible. De telles dispositions permettent de protéger à moindres coûts le marqueur à radiofréquences de l'environnement extérieur, tant préalablement que postérieurement à son installation sur l'objet à identifier.

Il est à prendre en compte que selon le choix des concepteurs de la présente invention visant à obtenir un dispositif d'identification par échanges de radiofréquences performant, industrialisé à moindres coûts et pouvant être aisément installé sur des objets à identifier de structure et d'agencement suivant leur extension transversales diverses, le marqueur à radiofréquences est placé très proche de la surface extérieure de l'objet à identifier potentiellement en matériau métallique, tel qu'un câble ou un faisceau de câbles.

Conformément à un tel choix, les concepteurs ont en corollaire choisi de profiter de l'extension longitudinale de l'objet allongé pour accroître la longueur propre des brins de l'antenne dipolaire, afin d'obtenir avec certitude un nombre suffisant de tours d'hélice quelle que soit l'agencement transversal de l'objet à identifier. Une extension en conséquente des brins procure un échange satisfaisant des radiofréquences entre le lecteur et le marqueur à radiofréquences dans le cadre de ladite diversification des objets à identifier.

Plus particulièrement, la disposition et l'orientation individuelle des brins sur le substrat flexible sont définies aptes à procurer, en une quelconque position enroulée du substrat flexible sur lui-même, un enroulement en hélice de chacun des dits brins d'antenne s'étendant suivant un pas d'hélice de préférence au moins égal à N1 fois la largeur de l'enroulement, N1 étant compris entre 1 et 10.

Plus particulièrement encore la disposition et l'orientation individuelle des brins sur le substrat flexible sont définies aptes à procurer, en une quelconque position enroulée du substrat flexible sur lui-même, un enroulement en hélice de chacun des dits brins d'antenne s'étendant de préférence suivant N2 pas d'hélice, N2 étant compris entre 1 et 5.

Selon l'agencement transversal de l'objet à identifier, considéré tant en conformation qu'en dimensions, l'ensemble formé par le marqueur à radiofréquences intégré au substrat flexible à l'état rétracté est apte à coopérer avec le lecteur avec un échange satisfaisant de radiofréquences permettant d'identifier l'objet à identifier, y compris dans le cas où l'objet à identifier est en matériau métallique.

Dans le cas où le marqueur à radiofréquences comporte une pluralité d'antennes dipolaires, la disposition et l'orientation de chacun des brins de chacune des antennes dipolaires confèrent de préférence, en une quelconque position enroulée du substrat flexible sur lui-même, un enroulement en hélice de chacun des brins de chacune des antennes dipolaires suivant des directions d'enroulement opposées interdisant une superposition par croisement des brins des antennes dipolaires entre eux.

Bien entendu l'appréciation de la conformation des enroulements des brins d'antenne en hélice spécifiquement obtenus selon l'objet à identifier est faite en position d'implantation du marqueur à radiofréquences sur un objet à allongé.

La présente invention a aussi pour objet une méthode de mise en oeuvre d'un dispositif d'identification tel qu'il vient d'être décrit.

Une telle méthode comprend les opérations suivantes :
- ) une opération classique de fabrication du marqueur à radiofréquences comprenant la puce électronique à laquelle sont connectés chacun des brins de ladite au moins une antenne dipolaire,
- ) une opération de conditionnement du marqueur à radiofréquences, selon laquelle le marqueur à radiofréquences est intégré au substrat flexible à mémoire de forme. Une telle opération de conditionnement est effectuée indifféremment par scellement du marqueur à radiofréquences en surface du substrat flexible ou par encapsulation du marqueur à radiofréquences entre deux couches du substrat flexible.
- ) une opération d'implantation du marqueur à radiofréquences par un opérateur sur l'objet à identifier, par déformation et par positionnement du substrat flexible à l'état déformé localement autour de l'objet à identifier, de sorte que chacun des brins d'antenne soit disposé suivant un enroulement en hélice à au moins un tour autour de l'objet à identifier, puis par interruption de la déformation par l'opérateur du substrat flexible induisant sa mise à l'état rétracté provoquant un enserrement de l'objet à identifier par le substrat flexible, puis
- ) une opération d'identification de l'objet à identifier, par placement du lecteur à proximité de l'objet à identifier jusqu'à l'obtention d'un échange pertinent de radiofréquences entre le lecteur et le marqueur à radiofréquences.

Des exemples de réalisation de la présente invention vont être décrits en relation avec les figures des planches annexées, dans lesquelles :
- la fig.1 est un schéma illustrant différentes opérations que comprend une méthode de mise en oeuvre d'un dispositif d'identification d'un objet allongé à identifier de la présente invention.
- Les fig.2 à fig.5 sont des illustrations en perspective de modalités respectives d'enroulement autour d'un objet allongé à identifier de brins d'au moins une antenne dipolaire d'un marqueur à radiofréquences conformément à la présente invention.
- la fig.6 est une illustration en perspective d'un exemple de réalisation d'un substrat flexible à mémoire de forme agencé en ruban torsadé formant des moyens de fixation d'un marqueur à radiofréquences de la présente invention sur un objet à identifier.
- les fig.7 et fig.8 sont des illustrations d'un autre exemple de réalisation d'un substrat flexible à mémoire de forme agencé en plaque souple étirable formant des moyens de fixation d'un marqueur à radiofréquences de la présente invention sur un objet à identifier, représenté respectivement postérieurement et préalablement à la fixation du marqueur à radiofréquences sur l'objet à identifier.

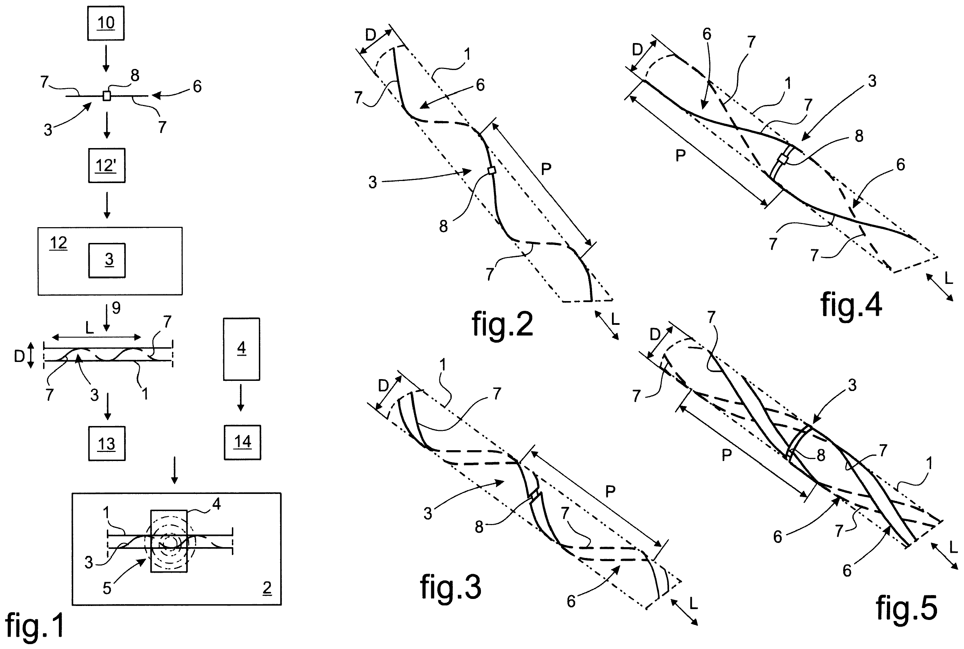

Sur la fig.1, un objet à identifier 1 tel qu'un câble, un faisceau de câbles, un conduit ou un profilé, est de conformation allongée dont la longueur L est significativement supérieure à sa plus grande dimension en largeur D. Un tel objet à identifier 1 est installé sur site 2 à bord d'un aéronef en présentant potentiellement divers agencements de sa section transversale, considérée au regard de sa conformation que de ses dimensions en extension transversale.

L'identification de l'objet à identifier 1 est effectuée au moyen d'un dispositif d'identification par coopération entre au moins un marqueur à radiofréquences 3 passif de type RFID et un lecteur 4 actif distant de l'objet à identifier 1 porteur du marqueur à radiofréquences 3. Le marqueur à radiofréquences 3 et le lecteur 4 coopèrent entre eux par échange de radiofréquences 5.

Compte tenu de son extension en longueur, un même objet à identifier 1 peut comporter plusieurs marqueurs à radiofréquences 3 répartis sur sa longueur et coopérants potentiellement avec un ou plusieurs lecteurs 4 distants de l'objet à identifier 1.

Le marqueur à radiofréquences 3 comprend au moins une antenne dipolaire 6 dont les brins 7 sont connectés à au moins une puce électronique 8. De tels brins 7 sont préférentiellement choisis agencés en lacet pour favoriser leur enroulement en hélice autour et à la périphérie de l'objet à identifier 1 en évitant leur détérioration lors de l'implantation du marqueur à radiofréquences 3 telle que décrite plus loin. Un même marqueur à radiofréquences 3 peut comporter plusieurs antennes dipolaires 6, qui sont connectées soit à une puce électronique 8 à multiples entrées soit à des puces électroniques 8 respectives indépendantes ou synchronisées.

Le marqueur à radiofréquences 3 est considéré comme passif car exempt de source d'énergie propre. Le lecteur 4 est considéré comme actif car il fournit à partir dudit échange de radiofréquences 5 l'énergie nécessaire au marqueur à radiofréquences 3 pour activer son fonctionnement.

Une méthode conforme à la présente invention de mise en oeuvre du dispositif d'identification, comprend une opération classique de fabrication 10 du marqueur à radiofréquences 3 et une opération d'implantation 9 du marqueur à radiofréquences 3 sur l'objet à identifier 1 préalablement à son installation à bord de l'aéronef 2.

Préalablement à l'opération d'implantation 9 du marqueur à radiofréquences 3 sur l'objet à identifier 1, la méthode comprend une opération de conditionnement 12' du marqueur à radiofréquences 3.

Selon cette opération de conditionnement 12', le marqueur à radiofréquences 3 est intégré à un substrat flexible 12 à mémoire de forme en vue de son implantation 9 sur l'objet à identifier 1. Le substrat flexible 12 forme des moyens de fixation du marqueur à radiofréquences 3 sur l'objet à identifier 1 par enserrement de l'objet à identifier 1 par le substrat flexible 12 par suite de sa déformation par un opérateur.

L'intégration au substrat flexible 12 du marqueur à radiofréquences 3 est par exemple réalisée par scellement du marqueur à radiofréquences 3 en surface du substrat flexible 12 ou par exemple encore est réalisée en encapsulant le marqueur à radiofréquences 3 entre deux couches du substrat flexible 12.

L'objet à identifier 1 étant équipé du marqueur à radiofréquences 3, une opération d'installation 13 de l'objet à identifier 1 est effectuée pour son montage sur site 2 à bord de l'aéronef.

La méthode comprend encore une opération de placement 14 du lecteur 4 à proximité de l'objet à identifier 1 pour mettre le lecteur 4 en coopération avec le marqueur à radiofréquences 3 par échange de radiofréquences 5 entre eux.

Par exemple, le lecteur 4 est installé à bord de l'aéronef 2 pour la mise en coopération permanente entre le lecteur 4 et au moins un marqueur à radiofréquences 3 implanté sur l'objet à identifier 1. Le marqueur à radiofréquences 3 et le lecteur 4 sont installés à bord de l'aéronef dans des positions relatives autorisant un échange de radiofréquences 5 entre eux.

Par exemple encore, le lecteur 4 est éventuellement exploité en cas de besoin par un opérateur approchant le lecteur 4 de l'objet à identifier pour placer le lecteur 4 en coopération avec le marqueur à radiofréquences 3.

Sur les fig.1 à fig.8, un marqueur à radiofréquences 3 comporte au moins une antenne dipolaire 6 dont les brins 7 agencés en lacet sont connectés à une puce électronique 8. Le marqueur à radiofréquences 3 est dédié à être implanté sur un objet à identifier 1 de conformation allongée, par enroulement en hélice des brins 7 de l'antenne dipolaire 6 autour de l'objet à identifier 1.

Sur les fig.2 à fig.7, l'enroulement en hélice de chacun des brins 7 autour de l'objet à identifier 1 s'étend suivant l'ensemble des dimensions de l'objet à identifier 1 définissant géométriquement ses dimensions transversales D et sa longueur L. L'une des extrémités des brins 7 est connectée à la puce électronique 8, tandis que leur autre extrémité libre est utilisée pour enrouler en hélice les brins 7 autour de l'objet à identifier 1. Les enroulements respectifs des brins 7 d'une même antenne dipolaire 6 autour de l'objet à identifier 1 sont de préférence homothétiques.

On relèvera que les dimensions d'extension L, D de l'objet à identifier 1 correspondent respectivement à la dimension d'extension en longueur L et à une quelconque dimension d'extension en largeur D des hélices respectivement formées par les brins 7 enroulés autour de l'objet à identifier 1.

Quelles que soient la position ou l'orientation sur lui-même de l'objet à identifier 1 considéré au regard de sa section transversale, au moins un tronçon de chacun des brins 7 s'étendant suivant au moins un tour d'hélice localement le long et autour de l'objet à identifier 1, est placé par rapport à un lecteur distant de manière à optimiser l'échange de radiofréquences entre eux, et cela quelle que soit la position du lecteur distant par rapport à l'objet à identifier.

Selon l'agencement propre de l'objet à identifier 1 et en considérant notamment la capacité du support flexible à se déformer élastiquement et/ou la position et l'orientation des brins 7 du marqueur à radiofréquences 3 implanté sur le substrat flexible 12, le nombre de pas d'hélice P formée par chacun des brins 7 d'une antenne dipolaire 6 entourant l'objet à identifier 1 est compris entre 1 et 5. Le pas d'hélice P s'étend par ailleurs suivant l'extension en longueur L de l'hélice d'une valeur comprise entre 1 et 10 fois la plus grande dimension suivant l'extension en largeur D de l'hélice.

Sur la fig.2 et la fig.3, le marqueur à radiofréquences 3 comporte une antenne dipolaire 6 unique. Par ailleurs sur les fig.2 et fig.4, les brins 7 conformés en lacet d'au moins une antenne dipolaire 6 sont plus particulièrement agencés en filins, tandis que sur les fig.3 et fig.5, les brins 7 conformés en lacet d'au moins une antenne dipolaire 6 sont plus particulièrement de section aplatie.

Sur les fig.4 à fig.6, le marqueur à radiofréquences 3 comporte deux antennes dipolaires 6 réparties radialement autour de l'objet à identifier 1. Dans ce cas, les enroulements en hélice respectifs des brins 7 de chacune des antennes dipolaires 6 s'entendent suivant des directions d'enroulement opposées. De telles dispositions permettent d'interdire une superposition par croisement des brins 7 d'antenne 6 entre eux, les brins 7 s'étendant l'un par rapport à l'autre à des côtés opposés de l'objet à identifier 1.

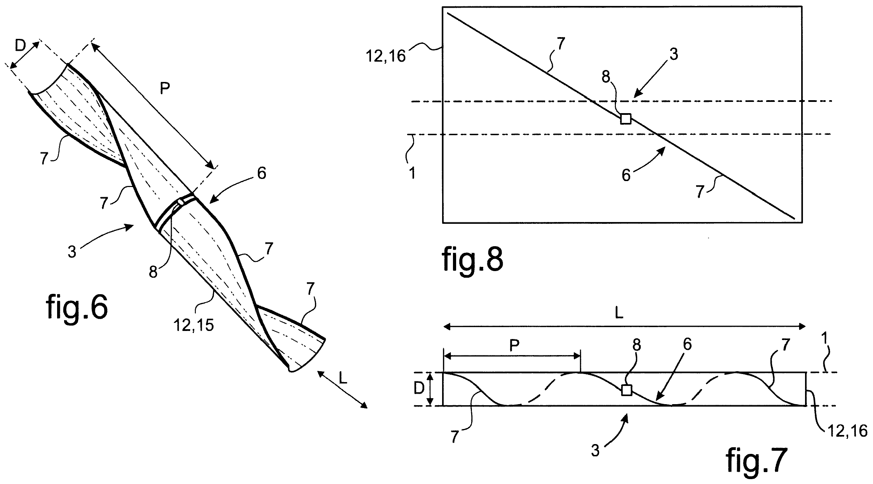

Sur la fig.6, le marqueur à radiofréquences 3 est intégré à un substrat flexible 12 à mémoire de forme agencé en ruban torsadé 15. L'agencement en torsade du ruban torsadé 15 confère au substrat flexible 12 son caractère à mémoire de forme. Le ruban torsadé 15 peut être soumis à déformation par un opérateur pour permettre son installation aisée localement sur l'objet à identifier 1, une interruption de ladite déformation provoquant une rétraction spontanée du ruban torsadé 15 qui enserre alors l'objet à identifier 1 à sa périphérie.

Plus particulièrement, le ruban torsadé 15 peut être déformé et être approché par un opérateur latéralement par rapport à l'objet à identifier 1, voire être mis en place progressivement autour de l'objet à identifier 1.

Les brins 7 d'antenne 6 agencés en lacet sont avantageusement intégrés au substrat flexible 12 en s'étendant suivant l'orientation d'extension des torses du ruban torsadé 15, tel que sur l'exemple illustré le long des bords longitudinaux du ruban torsadé 15.

Ces dispositions sont telles que l'opération de positionnement en hélice des brins 7 autour de l'objet à identifier 1 en est facilitée. En effet, les brins 7 sont chacun spontanément maintenus suivant une conformation en hélice par le ruban torsadé 15, indépendamment d'une intervention par un opérateur visant spécifiquement à conférer aux brins 7 de l'antenne 6 une conformation en hélice.

Sur les fig.7 et fig.8, le marqueur à radiofréquences est intégré à un substrat flexible 12 agencé en plaque souple 16, telle que formée d'un film étirable en polytétrafluoroéthylène.

Sur la fig.8, la plaque souple 16 peut être approchée latéralement par rapport à l'objet à identifier 1 puis être étirée par un opérateur préalablement à son enroulement autour de l'objet à identifier 1.

L'enroulement de la plaque souple 16 autour de l'objet à identifier 1 est effectué par l'opérateur de façon telle que les brins 7 sont chacun enroulés en hélice autour de l'objet à identifier 1, tel que représenté sur la fig.7. L'opérateur interrompant l'étirement de la plaque souple 16, celle-ci se rétracte autour de l'objet à identifier 1 en procurant la fixation du marqueur à radiofréquences 3 sur l'objet à identifier 1 par enserrement de l'objet à identifier par le substrat flexible 12 enroulé autour de l'objet à identifier.

Il est à relever que la valeur du pas P de l'hélice et le nombre de tours d'hélice de l'enroulement des brins 7 autour de l'objet à identifier 1 peuvent être déterminés en fonction de la section transversale connue de l'objet à identifier, en faisant varier l'orientation de la plaque souple 16 par rapport à la direction d'extension en longueur L de l'objet à identifier 1.

## Revendications

1. Dispositif d'identification d'un objet à identifier (1) de conformation allongée, ledit dispositif comprenant au moins un marqueur à radiofréquences (3) coopérant avec un lecteur (4) par échange entre eux de radiofréquences (5), ledit au moins un marqueur à radiofréquences (3) étant intégré à un substrat flexible (12) et comportant au moins une antenne dipolaire (6) à brins (7) connectés à au moins une puce électronique (8), le marqueur à radiofréquences (3) étant muni de moyens de fixation sur l'objet à identifier (1) aptes à maintenir en conformation autour de l'objet à identifier (1) chacun des brins (7) de l'antenne dipolaire (6) selon un enroulement en hélice à au moins un tour,
**caractérisé en ce que** lesdits moyens de fixation sont formés par le substrat flexible (12) qui est à mémoire de forme, lesdits moyens de fixation étant du type à enserrement de l'objet à identifier (1) par rétraction du substrat flexible (12) consécutivement à son étirement autour de l'objet à identifier (1).

2. Dispositif selon la revendication 1,
**caractérisé en ce que** le substrat flexible (12) est élastiquement déformable en étant agencé en ruban torsadé (15), le marqueur à radiofréquences (3) étant intégré au substrat flexible (12) selon une orientation des brins (7) s'étendant suivant l'orientation des torses du ruban torsadé (15).

3. Dispositif selon la revendication 1,
**caractérisé en ce que** le substrat flexible (12) est agencé en plaque souple (16) élastiquement déformable issue d'un matériau thermoplastique.

4. Dispositif selon la revendication 3,
**caractérisé en ce que** le matériau thermoplastique dont est issu le substrat flexible est le polytétrafluoroéthylène (PTFE).

5. Dispositif selon la revendication 1,
**caractérisé en ce que** le substrat flexible (12) est issu d'un matériau plastique à mémoire de forme (SMP d'après l'acronyme anglais Shape Memory Plastics) procurant un enserrement de l'objet à identifier (1) à température ambiante consécutivement à une déformation du substrat flexible (12) provoquée par sa mise à température de commutation indifféremment supérieure ou inférieure à un seuil de température défini pour une température ambiante prédéterminée du substrat flexible (12).

6. Dispositif selon la revendication 5,
**caractérisé en ce que** le matériau plastique à mémoire de forme est un polyuréthane thermoplastique.

7. Dispositif selon l'une quelconque des revendications 1 à 6,
**caractérisé en ce que** le marqueur à radiofréquences (3) est rapporté en surface du substrat flexible (12).

8. Dispositif selon l'une quelconque des revendications 1 et 6,
**caractérisé en ce que** le marqueur à radiofréquences (3) est encapsulé à l'intérieur du substrat flexible (12).

9. Dispositif selon l'une quelconque des revendications 1 à 8,
**caractérisé en ce que** la disposition et l'orientation individuelle des brins (7) sur le substrat flexible (12) sont définies aptes à procurer, en une quelconque position maintenue enroulée du substrat flexible (12) sur lui-même, un enroulement en hélice de chacun des dits brins (7) s'étendant suivant un pas d'hélice (P) au moins égal à N1 fois la largeur de l'enroulement, N1 étant compris entre 1 et 10.

10. Dispositif selon l'une quelconque des revendications 1 à 9,
**caractérisé en ce que** la disposition et l'orientation individuelle des brins (7) sur le substrat flexible (12) sont définies aptes à procurer, en une quelconque position maintenue enroulée du substrat flexible (12) sur lui-même, un enroulement en hélice de chacun des dits brins (7) s'étendant suivant N2 pas d'hélice, N2 étant compris entre 1 et 5.

11. Dispositif selon l'une quelconque des revendications 1 à 10,
**caractérisé en ce que** le marqueur à radiofréquences (3) comportant une pluralité d'antennes dipolaires (6), la disposition et l'orientation de chacun des brins (7) de chacune des antennes dipolaires (6) confèrent, en une quelconque position enroulée du substrat flexible (12) sur lui-même, un enroulement en hélice des brins (7) de chacune des antennes dipolaires (6) suivant des directions d'enroulement opposées interdisant une superposition par croisement des brins (7) des antennes dipolaires (6) entre eux.

12. Méthode de mise en oeuvre d'un dispositif selon l'une quelconque des revendications 1 à 11,
**caractérisée en ce que** ladite méthode comprend les opérations suivantes :
- ) une opération de fabrication du marqueur à radiofréquences (3) comprenant la puce électronique (8) à laquelle sont connectés chacun des brins (7) de ladite au moins une antenne dipolaire (6),
- ) une opération de conditionnement du marqueur à radiofréquences (3) par intégration au substrat flexible (12) à mémoire de forme, indifféremment par scellement du marqueur à radiofréquences (3) en surface du substrat flexible (12) ou par encapsulation du marqueur à radiofréquences (3) entre deux couches du substrat flexible (12),
- ) une opération d'implantation du marqueur à radiofréquences (3) par un opérateur sur l'objet à identifier (1), par déformation et par positionnement du substrat flexible (12) à l'état déformé localement autour de l'objet à identifier (1) de sorte que chacun des brins (7) d'antenne soit disposé suivant un enroulement en hélice à au moins un tour autour de l'objet à identifier (1), puis par interruption de la déformation par l'opérateur du substrat flexible (12) induisant sa mise à l'état rétracté provoquant un enserrement de l'objet à identifier (1) par le substrat flexible (12), puis
- ) une opération d'identification de l'objet à identifier (1), par placement du lecteur (4) à proximité de l'objet à identifier (1) jusqu'à obtenir un échange pertinent de radiofréquences (5) entre le lecteur (4) et le marqueur à radiofréquences (3).

## Patentansprüche

1. Vorrichtung zur Identifizierung eines länglichen zu identifizierenden Objekts (1), wobei die Vorrichtung mindestens einen Marker mit Radiofrequenzen (3) aufweist, der mit einem Lesegerät (4) durch gegenseitigen Austausch von Radiofrequenzen (5) zusammenwirkt, wobei der mindestens eine Marker mit Radiofrequenzen (3) in ein flexibles Substrat (12) integriert ist und mindestens eine Bipolarantenne (6) mit Strängen (7) aufweist, die mit mindestens einem Chip (8) verbunden sind, wobei der Marker mit Radiofrequenzen (3) mit Mitteln zur Befestigung an dem zu identifizierenden Objekt (1) versehen ist, die jeden der Stränge (7) der Bipolarantenne (6) um das zu identifizierende Objekt herum durch ein spiralförmiges Aufrollen mit mindestens einer Windung in Form halten können,
**dadurch gekennzeichnet, dass** die Befestigungsmittel durch das flexible Substrat (12) gebildet werden, das ein Formgedächtnis aufweist, wobei die Befestigungsmittel von einem Typ der Umschließung des zu identifizierenden Objekts (1) durch Schrumpfen des flexiblen Substrats (12) nach seinem Strecken um das zu identifizierende Objekt (1) herum ist.

2. Vorrichtung nach Anspruch 1,
**dadurch gekennzeichnet, dass** das flexible Substrat (12) elastisch verformbar ist, indem es ausgestaltet ist als ein verdrilltes Band (15), wobei der Marker mit Radiofrequenzen (3) in dem flexiblen Substrat (12) gemäß einer Ausrichtung der Stränge (7) integriert ist, die sich entlang der Ausrichtung der Drehungen des verdrillten Bandes (15) erstrecken.

3. Vorrichtung nach Anspruch 1,
**dadurch gekennzeichnet, dass** das flexible Substrat (12) als eine weiche Platte (16) ausgebildet ist, die elastisch verformbar ist und aus einem thermoplastischen Material hergestellt ist.

4. Vorrichtung nach Anspruch 3,
**dadurch gekennzeichnet, dass** das thermoplastische Material, aus dem das flexible Substrat hergestellt ist, Polytetrafluorethylen (PTFE) ist.

5. Vorrichtung nach Anspruch 1,
**dadurch gekennzeichnet, dass** das flexible Substrat (12) aus einem Kunststoffmaterial mit Formgedächtnis (SMP nach der englischen Abkürzung von Shape Memory Plastics) hergestellt ist, welches zu einer Umschließung des zu identifizierenden Objekts (1) bei Umgebungstemperatur führt, nach einer Verformung des flexiblen Substrats (12), die bewirkt wird durch seine Temperierung auf eine Umwandlungstemperatur, die größer oder kleiner als ein definierter Temperaturschwellenwert sein kann, der definiert ist für eine vorbestimmte Umgebungstemperatur des flexiblen Substrats (12).

6. Vorrichtung nach Anspruch 5,
**dadurch gekennzeichnet, dass** das Kunststoffmaterial mit Formgedächtnis ein thermoplastiches Polyurethan ist.

7. Vorrichtung nach einem der Ansprüche 1 bis 6,
**dadurch gekennzeichnet, dass** der Marker mit Radiofrequenzen (3) auf der Oberfläche des flexiblen Substrats (12) angebracht ist.

8. Vorrichtung nach einem der Ansprüche 1 bis 6,
**dadurch gekennzeichnet, dass** der Marker mit Radiofrequenzen (3) im Inneren des flexiblen Substrats (12) vergossen ist.

9. Vorrichtung nach einem der Ansprüche 1 bis 8,
**dadurch gekennzeichnet, dass** die Anordnung und die individuelle Ausrichtung der Stränge (7) auf dem flexiblen Substrat (12) definiert sind, um in einer beliebigen, um sich selbst aufgerollten Stellung des flexiblen Substrats (12) ein spiralförmiges Aufwickeln eines jeden der Stränge (7) bewirken zu können, die sich über eine Spiralwindung (P) erstrecken, die mindestens gleich N1 mal der Breite der Wicklung beträgt, wobei N1 zwischen 1 und 10 liegt.

10. Vorrichtung nach einem der Ansprüche 1 bis 9,
**dadurch gekennzeichnet, dass** die Anordnung und individuelle Ausrichtung der Stränge (7) auf dem flexiblen Substrat (12) definiert sind, um in einer beliebigen, um sich selbst aufgerollten Stellung des flexiblen Substrats (12) eine Spiralwicklung eines jeden der Stränge (7) bewirken zu können, die sich über N2 Spiralwindungen erstrecken, wobei N2 zwischen 1 und 5 liegt.

11. Vorrichtung nach einem der Ansprüche 1 bis 10,
**dadurch gekennzeichnet, dass** der Marker mit Radiofrequenzen (3) eine Mehrzahl von Bipolarantennen (6) aufweist, wobei die Anordnung und Ausrichtung eines jeden der Stränge (7) jeder der Bipolarantennen (6) in einer beliebigen, um sich selbst aufgerollten Stellung des flexiblen Substrats (12) den Strängen (7) einer jeden der Bipolarantennen (6) eine Spiralwicklung in entgegengesetzten Aufwickelrichtungen verleihen, die eine Überlagerung durch Kreuzen der Stränge (7) der Bipolarantennen (6) untereinander unterbinden.

12. Verfahren zur Implementierung einer Vorrichtung nach einem der Ansprüche 1 bis 11,
**dadurch gekennzeichnet, dass** das Verfahren folgende Schritte aufweist:
- ) einen Schritt der Herstellung des Markers mit Radiofrequenzen (3), der einen Chip (8) aufweist, mit dem jeder der Stränge (7) der mindestens einen Bipolarantenne (6) verbunden ist,
- ) einen Schritt der Konditionierung des Markers mit Radiofrequenzen (3) durch Integration in einem flexiblen Substrat (12) mit Formgedächtnis durch Verankerung des Markers mit Radiofrequenzen (3) an der Oberfläche des flexiblen Substrats (12) oder durch Vergießen des Markers mit Radiofrequenzen (3) zwischen zwei Schichten des flexiblen Substrats (12),
- ) einen Schritt des Einsetzens des Markers mit Radiofrequenzen (3) durch eine Bedienungsperson in das zu identifizierende Objekt (1) durch Verformung und durch Positionierung des flexiblen Substrats (12) in einem örtlich verformten Zustand um das zu identifizierende Objekt (1) herum, derart, dass jeder der Stränge (7) der Antenne entlang einer Spiralwicklung mit mindestens einer Windung um das zu identifizierende Objekt (1) herum angeordnet ist, und dann durch Unterbrechung der Verformung des flexiblen Substrats (12) durch die Bedienungsperson, sodass dieses in den geschrumpften Zustand gelangt, was eine Umschließung des zu identifizierenden Objekts (1) durch das flexible Substrat (12) bewirkt, anschließend
- ) einen Schritt der Identifizierung des zu identifizierenden Objekts (1) durch die Anordnung des Lesegeräts (4) in der Nähe des zu identifizierenden Objekts (1), bis ein aussagekräftiger Austausch von Radiofrequenzen (5) zwischen dem Lesegerät (4) und dem Marker mit Radiofrequenzen (3) erhalten wird.

## Claims

1. Device for identification of an object to be identified (1) of elongated conformation, said device comprising at least one radio frequency marker (3) cooperating with a reader (4) by exchange of radio frequencies (5) between them, said at least one radio frequency marker (3) being integrated in a flexible substrate (12) and comprising at least one dipole antenna (6) with strands (7) connected to at least one electronic chip (8), the radio frequency marker (3) being provided with means for fastening on the object to be identified (1) which are suitable for maintaining in conformation around the object to be identified (1) each of the strands (7) of the dipole antenna (6) according to a helical winding with at least one turn,
**characterised in that** said fastening means are formed by the flexible substrate (12) which is a shape memory flexible substrate, said fastening means being of the type for clasping of the object to be identified (1) by retraction of the flexible substrate (12) consecutively to its stretching around the object to be identified (1).

2. Device according to claim 1,
**characterised in that** the flexible substrate (12) is elastically deformable by being arranged as a twisted ribbon (15), the radio frequency marker (3) being integrated in the flexible substrate (12) according to an orientation of the strands (7) extending along the orientation of the twists of the twisted ribbon (15).

3. Device according to claim 1,
**characterised in that** the flexible substrate (12) is arranged as an elastically deformable supple plate (16) obtained from a thermoplastic material.

4. Device according to claim 3,
**characterised in that** the thermoplastic material from which the flexible substrate is obtained is polytetrafluoroethylene (PTFE).

5. Device according to claim 1,
**characterised in that** the flexible substrate (12) is obtained from a plastic material with shape memory (SMP according to the English acronym Shape Memory Plastics) providing a clasping of the object to be identified (1) at ambient temperature consecutively to a deformation of the flexible substrate (12) caused by its switching temperature equally well above or below a temperature threshold defined for a predetermined ambient temperature of the flexible substrate (12).

6. Device according to claim 5,
**characterised in that** the plastic material with shape memory is a thermoplastic polyurethane.

7. Device according to any one of claims 1 to 6,
**characterised in that** the radio frequency marker (3) is mounted on the surface of the flexible substrate (12).

8. Device according to any one of claims 1 to 6, **characterised in that** the radio frequency marker (3) is encapsulated inside the flexible substrate (12).

9. Device according to any one of claims 1 to 8,
**characterised in that** the arrangement and the individual orientation of the strands (7) on the flexible substrate (12) are defined suitable for providing, at any wound maintained position of the flexible substrate (12) on itself, a helical winding of each of said strands (7) extending along a helical pitch (P) at least equal to N1 times the width of the winding, N1 being comprised between 1 and 10.

10. Device according to any one of claims 1 to 9,
**characterised in that** the arrangement and the individual orientation of the strands (7) on the flexible substrate (12) are defined suitable for providing, at any wound maintained position of the flexible substrate (12) on itself, a helical winding of each of said strands (7) extending along N2 helical pitch, N2 being comprised between 1 and 5.

11. Device according to any one of claims 1 to 10,
**characterised in that** the radio frequency marker (3) comprising a plurality of dipole antennas (6), the arrangement and the orientation of each of the strands (7) of each of the dipole antennas (6) impart, at any wound maintained position of the flexible substrate (12) on itself, a helical winding of the strands (7) of each of the dipole antennas (6) along opposite winding directions prohibiting a superimposition by crossing of the strands (7) of the dipole antennas (6) between them.

12. Method for implementation of a device according to any one of claims 1 to 11,
**characterised in that** said method comprises the following operations:
- ) an operation for producing the radio frequency marker (3) comprising the electronic chip (8) to which are connected each of the strands (7) of said at least one dipole antenna (6),
- ) an operation for packaging the radio frequency marker (3) by integration in the flexible substrate (12) with shape memory, equally well by sealing the radio frequency marker (3) at the surface of the flexible substrate (12) or by encapsulation of the radio frequency marker (3) between two layers of the flexible substrate (12),
- ) an operation for implantation of the radio frequency marker (3) by an operator on the object to be identified (1), by deformation of and by locally positioning the flexible substrate (12) in the deformed state around the object to be identified (1) so that each of the antenna strands (7) is arranged along a helical winding with at least one turn about the object to be identified (1), then by interruption of the deformation by the operator of the flexible substrate (12) inducing its setting into the retracted state causing a clasping of the object to be identified (1) by the flexible substrate (12), then
- ) an operation for identification of the object to be identified (1), by placing the reader (4) near the object to be identified (1) until a relevant exchange of radio frequencies (5) between the reader (4) and the radio frequency marker (3) is obtained.
